# EUROPÄISCHE PATENTSCHRIFT

(11) **EP 3 283 791 B1**
(45) Veröffentlichungstag und Bekanntmachung des Hinweises auf die Patenterteilung: **17.03.2021**
(21) Anmeldenummer: 16713348.7
(22) Anmeldetag: 21.03.2016
(51) Int. Cl.: F16H 55/12, E05F 15/635

(54) **GETRIEBEVORRICHTUNG ZUR ANBRINGUNG AN EINER ANTRIEBSWELLE**
TRANSMISSION DEVICE FOR INSTALLING ON A DRIVESHAFT
SYSTÈME D'ENGRENAGE DESTINÉ À ÊTRE INSTALLÉ SUR UN ARBRE D'ENTRAÎNEMENT

(30) Priorität: 13.04.2015 DE 202015101789 U; 19.10.2015 DE 202015105507 U
(43) Veröffentlichungstag der Anmeldung: 21.02.2018
(73) Patentinhaber: Lock Antriebstechnik GmbH, 88521 Ertingen (DE)
(72) Erfinder: BAUSCH, Manfred, 88527 Unlingen (DE); BAUR, Marius, 88524 Oberwachingen (DE); VOGEL, Daniela, 72511 Bingen (DE)
(74) Vertreter: Otten, Roth, Dobler & Partner mbB Patentanwälte
(86) Internationale Anmeldenummer: PCT/EP2016/056087
(87) Internationale Veröffentlichungsnummer: WO 2016/165914

(56) Entgegenhaltungen:
- EP-A1- 0 881 409
- WO-A1-95/06184

## Beschreibung

Die Erfindung betrifft eine Getriebevorrichtungsanbringung zur Anbringung an einer Antriebswelle nach dem Oberbegriff des Anspruchs 1.

### Stand der Technik

Getriebevorrichtungen der einleitend bezeichneten Art sind in vielfältiger Ausführungsform bereits bekannt.

Beispielsweise werden Zahnstangengetriebe eingesetzt, um in Gewächshäusern Glasflügel, die mit einem Ende der Zahnstange verbunden sind, in unterschiedliche Schwenkpositionen zu bewegen, insbesondere in eine geschlossene Position und eine vollständig geöffnete Position.

Häufig sind eine ganze Reihe von Zahnstangengetriebe, auf einer Antriebswelle angeordnet, um damit eine Vielzahl von Glasflügel betätigen zu können, die jeweils mit einem Ende einer jeweiligen Zahnstange des Zahnstangengetriebes in Verbindung stehen. Die EP 0 881 409 A1 offenbart ein Beispiel einer Getriebevorrichtung.

### Aufgabe und Vorteile der Erfindung

Der Erfindung liegt die Aufgabe zugrunde, eine Getriebevorrichtung der einleitend bezeichneten Art in einer Weise auszugestalten, dass vielfältige Einsatz- und Montagemöglichkeiten bestehen.

Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einer Getriebevorrichtung zur Anbringung an einer Antriebswelle aus, die einen Grundkörper aufweist, der die Antriebswelle umschließt sowie ein Ritzel besitzt, das im montierten Zustand im Grundkörper und auf der Antriebswelle angeordnet ist und eine Zahnstange umfasst, die mit dem Ritzel zusammenwirkt und durch den Grundkörper verläuft.

Der Kern der Erfindung liegt nun darin, dass der Grundkörper insbesondere in einem ungeteilten Zustand, so wie er nach einer Anbringung an einer Antriebswelle in kompletter Form ausgebildet ist, einseitig derart offen ist, dass er sich auf eine Antriebswelle in radialer Richtung aufschieben lässt, und dass das Ritzel mehrteilig ist, sodass eine Montage an der Antriebswelle ermöglich ist, bei welcher sich die Teile des Ritzels durch eine in Bezug zur Antriebswelle radiale Bewegung zusammensetzen lassen.

Durch diese Maßnahme ist es insbesondere möglich, an einer Antriebswelle die erfindungsgemäße Getriebevorrichtung zu montieren, ohne dass die Enden der Antriebswelle zugänglich sein müssen, so wie es bei aus dem Stand der Technik bekannten Zahnstangengetrieben nötig ist, bei welchen insbesondere ein Ritzel sowie ein das Ritzel umgebendes Gehäuse nur durch axiales Aufschieben auf eine Antriebswelle über ein Ende der Antriebswelle montierbar ist.

Dagegen lässt sich die erfindungsgemäße Getriebevorrichtung nachrüsten oder als Ersatz für verschleißende Zahnstangengetriebe an einem vollständig montierten System an nahezu jeder beliebigen Stelle montieren, ohne dass eine vorige Demontage irgendwelcher Tragteile, insbesondere der Antriebswelle notwendig wäre und ohne dass ein Ende der Antriebswelle zugänglich sein muss.

In einer besonders bevorzugten Ausgestaltung der Erfindung umfasst der Grundkörper einen Lagerabschnitt zur beispielsweise unmittelbaren Lagerung der Antriebswelle.

Hierdurch wird der Aufbau der Getriebevorrichtung einfach, da zum Beispiel bei einem Gleitlager außer Lagerflächen keine weiteren Lagerteile erforderlich sind.

Vorzugsweise ist der Lagerabschnitt als Gleitlager ausgebildet.

Zum Beispiel umfasst die Lagerfläche ein Kunststoffteil, das bevorzugt unmittelbar am Grundkörper angebracht ist. Die Lagerfläche kann aber auch am Grundkörper selbst ausgebildet sein.

Dies ist insbesondere dann vorteilhaft, wenn der Grundkörper aus Kunststoff besteht. Dies eröffnet die Möglichkeit ein Gleitlager direkt aus Kunststoff im Grundkörper zu integrieren, insbesondere einstückig aus diesem auszubilden.

In einer weiteren besonders bevorzugten Ausgestaltung der Erfindung besteht der Grundkörper aus einem Blechbiegeteil.

Durch diese Maßnahme lässt sich der Grundkörper mit geringem Materialeinsatz herstellen.

In das Blechbiegeteil lassen sich an Auflagestellen einer sich darin drehender Antriebswelle z.B. ein oder mehrere Lagereinsätze, insbesondere Kunststoffeinsätze anbringen. Der Grundkörper umfasst vorzugsweise zwei Lagerschenkel, in welchen in einer passenden Rundung im montierten Zustand eine Antriebswelle liegt. Die Stellen, an welchen die Antriebswelle mit den Schenkeln in Kontakt steht, sind vorzugsweise mit einem insbesondere U-förmigen Kunststoffteil überzogen, dass einerseits eine Gleitlageroberfläche bereitstellt und andererseits durch die U-förmige Ausgestaltung sich in einfacher Weise am jeweiligen insbesondere plattenförmigen Schenkel des Grundkörpers fixieren lässt.

In einer besonders bevorzugten Ausgestaltung der Erfindung ist das Ritzel zweiteilig aus zwei Ritzelhälften ausgebildet. Dadurch kann das Ritzel durch Zusammenfügen der Ritzelhälften an jeder Stelle einer Antriebswelle an der Antriebswelle montiert werden, ohne dass das Ritzel axial aufgesteckt werden müsste.

In einer überdies bevorzugten Ausgestaltung der Erfindung ist eine Gleitleiste für die Zahnstange vorgesehen. Damit wird eine definierte Gleitfläche für eine Rückseite, d.h. einer der Zahnung gegenüberliegende Seite der Zahnstange ermöglicht.

Um eine definierte Positionierung der Gleitleiste in Bezug zum Grundkörper zu realisieren, wird außerdem vorgeschlagen, dass die Gleitleiste in einer Weise ausgeformt ist, dass ein Anschlag zum Grundkörper vorgesehen ist, der eine Verschiebung der Gleitleiste in einer Längsrichtung zur Zahnstange verhindert. Beispielsweise sind an der Gleitleiste Aussparungen vorgesehen, in welchen Schenkelabschnitte des Grundkörpers eingelassen verlaufen.

In einer außerdem vorteilhaften Ausführungsform der Erfindung umfasst der Grundkörper zwei Schenkel, die im montierten Zustand über die Antriebswelle überstehen und an welchen sich eine Gleitleiste für die Zahnstange abstützt. Insbesondere sind die Schenkel an einer Antriebswelle gegenüberliegenden Seite in Richtung einer Antriebswelle über

Stege miteinander verbunden, sodass an gegenüberliegenden Seiten jeweils eine quer zu einer Antriebswelle ausgerichtete Lasche entsteht, in welche sich nicht nur die Zahnstange, sondern auch die Gleitleiste einlegen lässt. Vorzugsweise sind in der Gleitleiste Aussparungen vorgesehen, um die über Stege miteinander verbundenen Schenkel darin für eine Verschiebesicherung der Gleitleiste in Richtung Zahnstange aufzunehmen.

Darüber hinaus ist es vorteilhaft, wenn Schenkel des Grundkörpers derart ausgestaltet sind, dass sich jeweils gegenüberliegende Schenkelabschnitte eines Schenkels in Richtung Zahnstange betrachtet über die Gleitleiste gegeneinander abstützen.

Dazu umschließen die betreffenden Schenkelabschnitte eines Schenkels, insbesondere jeweils verbunden über einen Steg, zum Beispiel die Gleitleiste an den Aussparungen der Gleitleiste, so dass die Stege vorzugsweise in den Aussparungen eingelassen sind. Durch diese Maßnahme wird der Grundkörper im montierten Zustand bei eingelegter Zahnstange, die in ein auf einer Antriebswelle montiertes Ritzel eingreift, mit ihrem Rücken an der Gleitschiene anliegt und sich zwischen den Schenkel des Grundkörpers befindet, mittels der sich gegeneinander abstützenden Teile ausgesteift.

Erfindungsgemäß ist das Ritzel derart ausgestaltet, dass sich die Teile des Ritzels in einer ersten Bewegung radial zur Antriebswelle und in einer bevorzugt abschließenden Bewegung axial zur Antriebswelle auf die Antriebswelle aufschieben und auf der Antriebswelle zusammenfügen, insbesondere zusammenschieben, lassen. Durch diese Maßnahme wird eine Montage des Ritzels auf der Antriebswelle erleichtert und die Fertigungs- und Montagekosten des Ritzels vorteilhaft verringert. Denn durch das axiale Zusammenschieben lässt sich einerseits eine vorfixierte Ritzeleinheit erzeugen, die bereits an einer Antriebswelle selbsttätig positioniert bleibt. Dadurch lassen sich leicht Schraubenmittel zur endgültigen Fixierung und Positionierung einsetzen. Andererseits ist es möglich Schraubenmittel einzusparen.

Erfindungsgemäß sind die Enden der Teile des Ritzels im zusammengesetzten Zustand überlappend ausgebildet. Hierdurch ist ein vergleichsweise einfaches Zusammenfügen, vorteilhaft Zusammenstecken und/oder Zusammenschieben des Ritzels in axialer Richtung möglich.

Weiter wird vorgeschlagen, dass die Enden der Teile des Ritzels, insbesondere an den überlappenden Stellen, eine Verzahnung aufweisen. Hierdurch kann die Montage der Ritzelteile durch einfaches Zusammenstecken, insbesondere ohne Verschrauben, Verkleben und/oder Vernieten erfolgen.

Vorzugsweise ist die Ausformung der Ritzel insbesondere der überlappenden Stellen derart, dass die Teile beim axialen Zusammenstecken in Bezug zueinander einschnappen.

Die Verzahnung ist vorteilhafterweise derart ausgebildet, dass eine kraftschlüssige, insbesondere reibkraftschlüssige Verbindung des Ritzels mit der Antriebswelle durch das Zusammenstecken der Ritzelteile auf der Antriebswelle erfolgt. Dadurch wird eine Verdrehung des Ritzels auf der Antriebswelle verhindert.

### Beschreibung der Ausführungsbeispiele

Ein Ausführungsbeispiel der Erfindung ist in den Zeichnungen dargestellt und wird unter Angabe weiterer Vorteile und Einzelheiten nachstehend näher erläutert.

Es zeigen:
Figuren 1 bis 6 und 10, 11 in jeweils perspektivischer Ansicht und jeweils unterschiedlichen Montagezuständen (mit Ausnahme von Figur 2 und 3, wo lediglich unterschiedliche Perspektiven dargestellt sind) die Anbringung eines erfindungsgemäßen Zahnstangengetriebes an einer Antriebswelle bis zu einem komplett montierten Zustand des Zahnstangengetriebes (s. Fig. 6 und 11).
Figuren 7 bis 9 in jeweils perspektivischer Ansicht und jeweils unterschiedlichen Montagezuständen ein erfindungsgemäßes Ritzel, wobei in Figur 7 ein Teil eines Ritzels dargestellt ist.

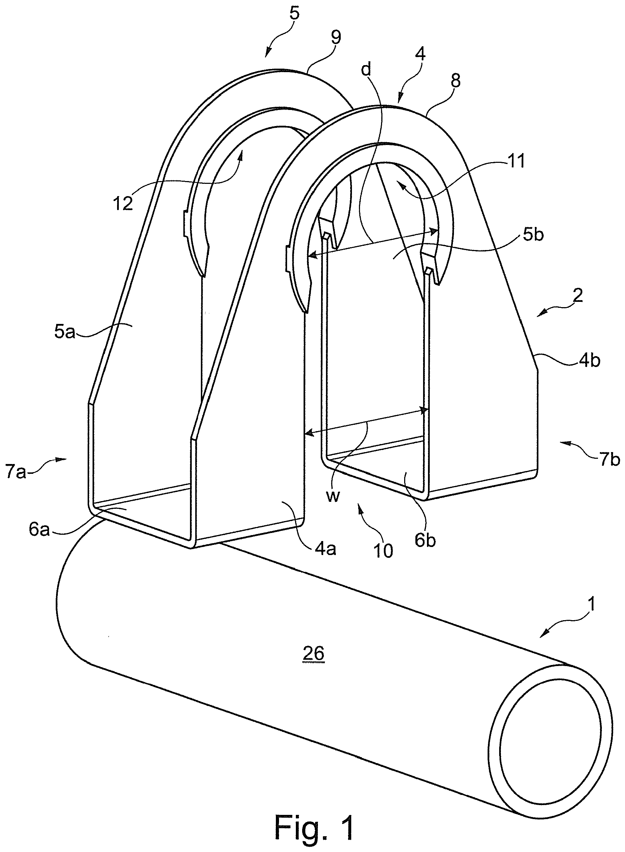

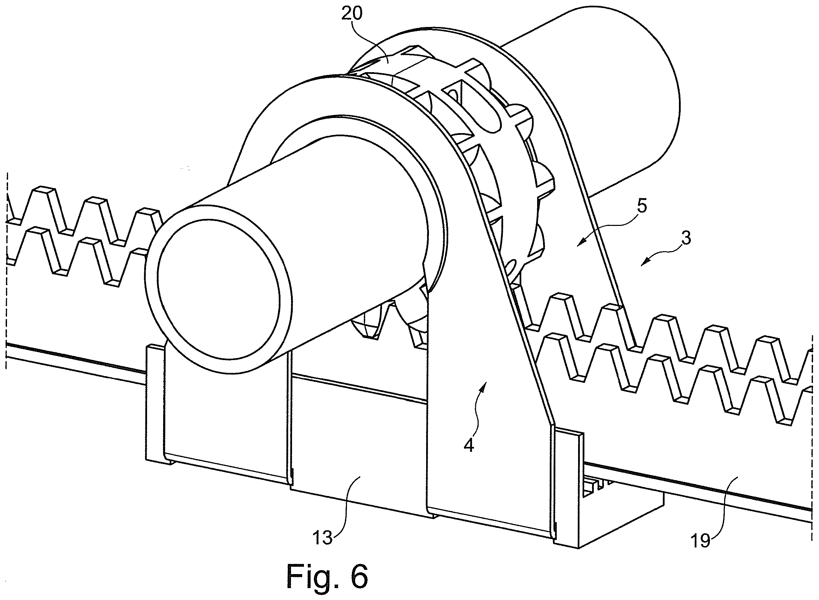

In Figur 1 ist ein Abschnitt einer Antriebswelle 1 sowie ein Grundkörper beziehungsweise Gehäuse 2 eines kompletten Zahnstangengetriebes 3 (s. Figur 6) dargestellt. Das Gehäuse 2 umfasst zwei Schenkel 4, 5 die jeweils gegenüberliegende Schenkelabschnitte 4a und 4b beziehungsweise Schenkelabschnitte 5a und 5b aufweisen.

Jeweils zwei Schenkelabschnitte 4a sowie 5a beziehungsweise 4b sowie 5b sind über einen Verbindungssteg 6a beziehungsweise 6b miteinander verbunden. Auf diese Weise bilden die Schenkelabschnitte 4a, 5a mit dem Verbindungssteg 6a sowie die Schenkelabschnitte 4b, 5b mit dem Verbindungssteg 6b jeweils eine U-förmige Schlaufe 7a beziehungsweise 7b des Gehäuses 2. Darüber hinaus sind die Schlaufen 7a, 7b über Verbindungsbögen 8, 9 der Schenkel 4, 5 derart gegenüberliegend angeordnet, dass eine Öffnung 10 entsteht, die eine Öffnungsweite w aufweist, die einem Kreisdurchmesser d einer jeweiligen Lageröffnung 11, 12 im jeweiligen Verbindungsbogen 8, 9 zumindest annähernd entspricht, bevorzugt gleich groß oder etwas größer ist.

Dadurch wird es möglich, das Gehäuse 2 mit der Öffnungsweite w über die Welle 1 radial zu stülpen, bis die Lagerwelle 1 in den Lageraussparungen 11, 12 und einer dort ausgebildeten Lagerfläche (nicht dargestellt) satt anliegt.

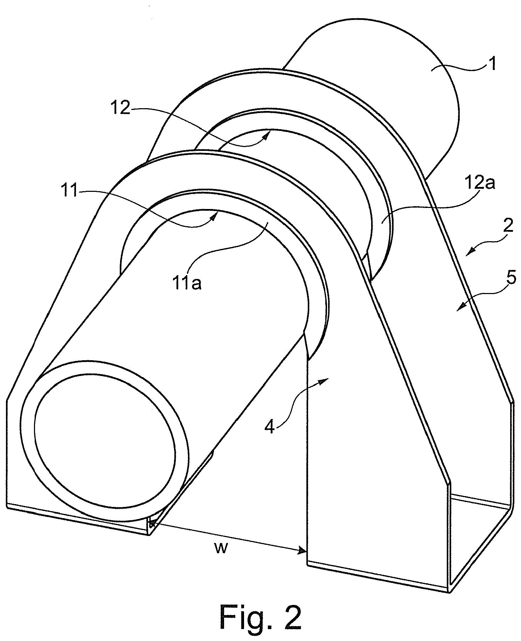

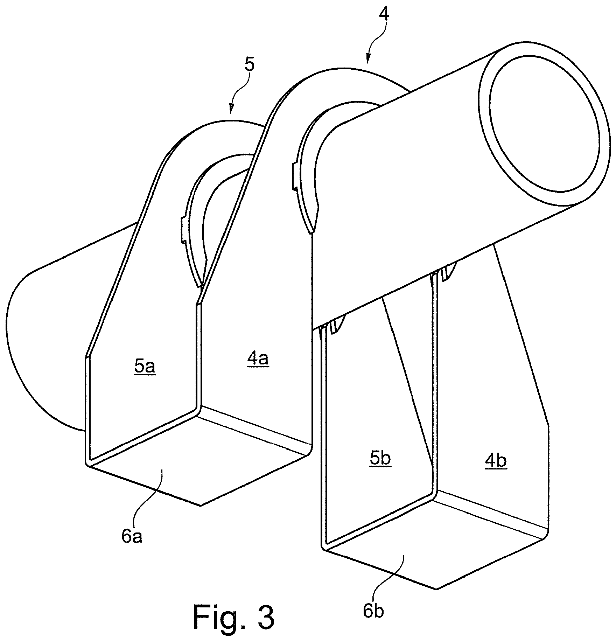

In Figur 3 ist bezogen auf Figur 2 nochmals eine andere Perspektive dieses Zustandes abgebildet, bei welcher insbesondere die Verbindungsstege 6a, 6b der Schenkelabschnitte 4a, 5a beziehungsweise 4b, 5b der Schenkel 4, 5 deutlich hervortreten.

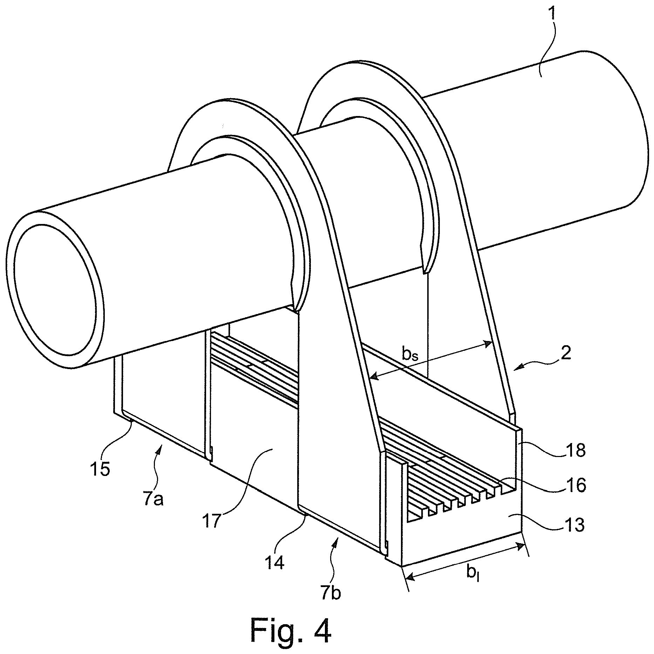

Die jeweilige Schlaufe 7a, 7b dient zur Aufnahme einer Gleitleiste 13 (s. Fig. 4), die in die Schlaufen 7a, 7b eingelegt ist. Dazu ist an einer der Verbindungsstege 6a, 6b gegenüberliegenden Seite an der Gleitleiste jeweils eine Aussparung 14, 15 vorgesehen, in welcher der jeweilige Verbindungssteg 6a, 6b aufgenommen ist. Dadurch wird eine Verschiebung der Gleitleiste 13 in ihrer Längsrichtung unterbunden. Die Gleitleiste 13 weist bevorzugt eine Breite bₗ auf, die einer Breite bₛ der Schlaufen 7a, 7b entspricht, sodass die Gleitleiste 13 auch als Aussteifungselement des Gehäuses 2 wirkt.

Gleitrippen 16 der Gleitleiste 13 sowie seitliche Berandungswände 17, 18 dienen der Führung einer darin angeordneten Zahnstange 19 (siehe Figur 6).

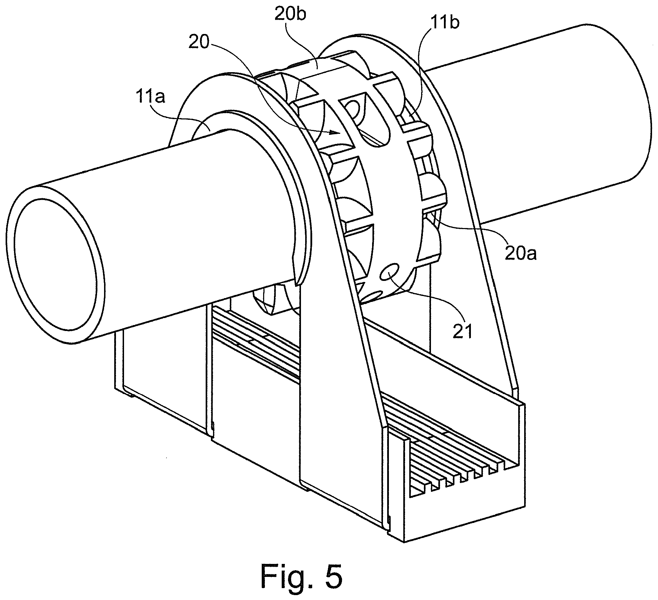

Vor dem Einschieben einer Zahnstange 19, bei einer Montage an einer Antriebswelle 1, wird ein Zahnstangenritzel 20 montiert (s. Fig. 5), das erfindungsgemäß mehrteilig ist, insbesondere aus zwei Ritzelhälften 20a, 20b besteht, die zum Beispiel miteinander verschraubt sind. Das Ritzel 20 wird zum Beispiel über Fixierschrauben (nicht dargestellt) in Löchern 21 auf der Welle 1 gegen eine Verdrehung gesichert.

Die Lageraussparungen 11, 12 sind zum Beispiel, so wie in den Figuren dargestellt, durch jeweils ein Lagereinsatz 11a, 11b aus Kunststoff gebildet, der auf den jeweiligen Schenkel 4, 5 aufgesteckt ist und den jeweiligen Schenkel über einen vorgegebenen Wandungsabschnitt umgreifen.

Denkbar ist jedoch auch, dass die Lagerfläche bereits im Gehäuse integriert ist, insbesondere dann, wenn das Gehäuse aus einem vergleichsweise gut gleitenden Material wie Kunststoff besteht.

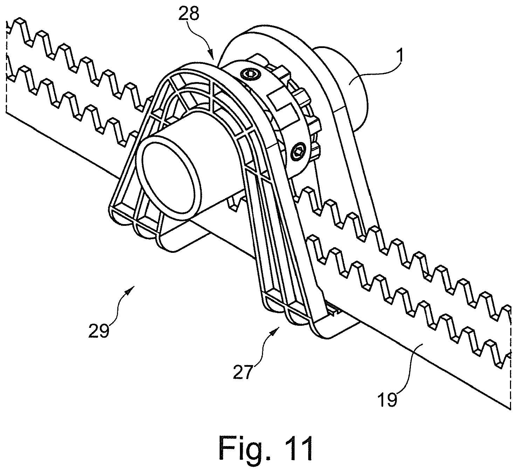

Figur 6 bzw. 11 zeigt den vollständig montierten Zustand des Zahnstangengetriebes 3 bzw. 29 mit Zahnstange 19, die mit dem Ritzel 20 bzw. 28 kämmt und mit ihrer Rückseite auf den Gleitrippen 16 bzw. 30a, 30b und ihren seitlichen Flanken an den Berandungswänden 17, 18 geführt ist.

Die Abmessungen der Teile sind insbesondere so gewählt, dass die Zahnstange stramm zwischen Ritzel 20 und Gleitleiste 13 geführt ist, sodass sich die Schenkel 4, 5 dadurch gegenseitig aussteifen und insgesamt ein stabil angeordnetes Zahnstangengetriebe 3 entsteht. Durch die eingeschobene, montierte Zahnstange 19 kann insbesondere das Gehäuse 2 nicht mehr von der Antriebswelle 1 in radialer Richtung abgehoben werden. Darüber hinaus ist die Gleitleiste 13 bei eingeschobener Zahnstange 19 gegen ein Herausfallen bzw. Herausnehmen gesichert.

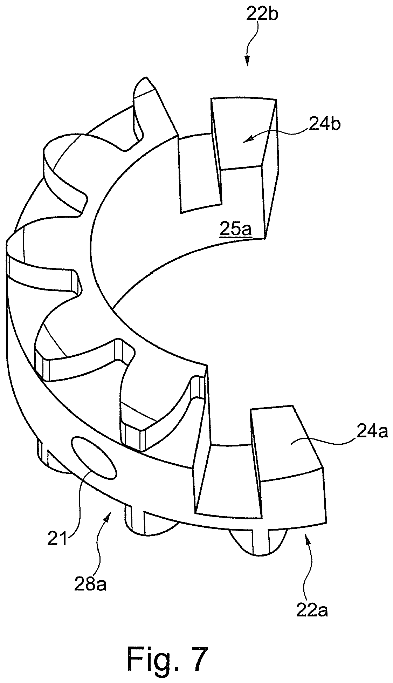

In Figur 7 ist eine Variante eines Ritzels 28 mit Ritzelhälften 28a, 28b dargestellt, welche an ihren Enden 22a, 22b eine Verzahnungsstruktur 24a bzw. 24b aufweisen.

Vorteilhafterweise sind die Verzahnungsstrukturen zumindest leicht V-förmig ausgestaltet. So können die Verzahnungsstrukturen im Querschnitt, parallel zu einer Rotationsachse A des Ritzels 28, in einer Sicht in radialer Richtung auf das Ritzel 28 gesehen, V-förmig ausgebildet sein. Hierdurch sind die Ritzelhälften 28a, 28b im montierten Zustand auf der Antriebswelle 1 derart miteinander verrastet, dass ein Lösen der Ritzelhälften 28a, 28b, insbesondere in axialer Richtung, erschwert oder sogar verhindert wird.

Bevorzugt sind die Enden 22a, 22b derart ausgestaltet, dass durch die Montage der Ritzelhälften 28a, 28b eine radiale Kraft der Ritzelhälften 28a, 28b in Richtung Antriebswelle 1 erzeugt wird, sodass die Ritzelhälften 28a, 28b mit ihren Anlageflächen 25a, 25b auf der Antriebswelle 1 reibschlüssig und/oder kraftschlüssig halten.

Die Montage der Ritzelhälften 28a, 28b an die Antriebswelle 1 erfolgt im Wesentlichen in zwei Schritten.

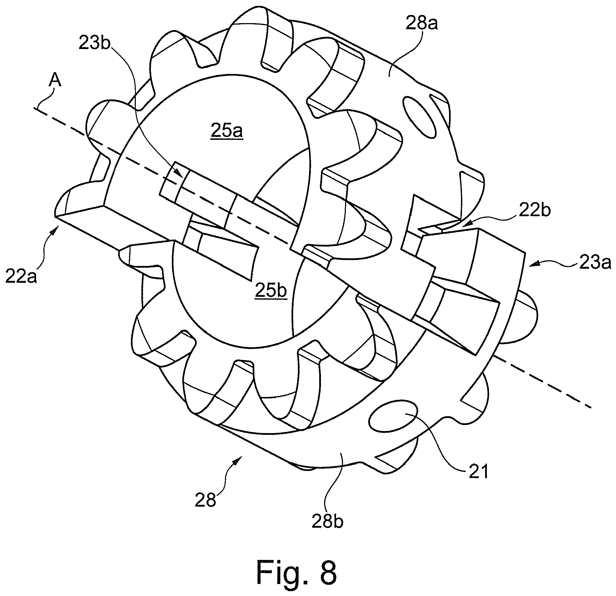

In einem ersten Schritt werden die Ritzelhälften 28a, 28b in einer radialen Bewegung in Richtung einer Rotationsachse A des Ritzels mit ihren Anlageflächen 25a, 25b auf eine Antriebwellenoberfläche 26 aufgesetzt. Dabei sind die beiden Ritzelhälften 28a, 28b derart zueinander positioniert, dass sich die Enden 22a, 22b, 23a, 23b in axialer Richtung gesehen überlappen (siehe hierzu Figur 8). Gegebenenfalls überlappen sich auch die Endstirnseiten der Ritzelhälften 28a, 28b, insbesondere der Ritzelhälftenenden 22a, 22b womit sich ein erleichtertes axiales Zusammenschieben erreichen lässt. Beispielsweise ist ein Zahn des Ritzelhälftenendes 22a in axialer Richtung gesehen vergleichsweise länger bzw. höher ausgebildet, als ein Zahn des gegenüber angeordneten Ritzelhälftenendes 22b der Ritzelhälfte 28a. Die Ausbildung der Zähne der Ritzelhälfte 28b ist entsprechend passend entgegengesetzt an den Ritzelhälftenenden 23a, 23b ausgestaltet. Hierdurch ist eine Führung der Ritzelhälften 28a, 28b zueinander beim Zusammenstecken in axialer Richtung realisiert.

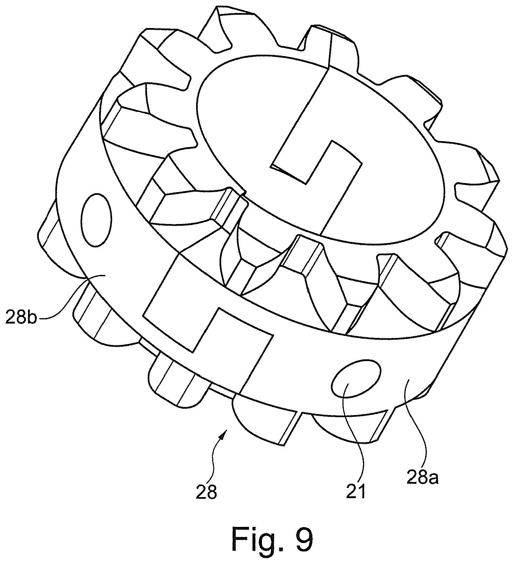

In einem zweiten, weiteren Schritt werden die Ritzelhälften in einer axialen Bewegung, parallel zur Rotationsachse A entlang der Antriebswellenoberfläche 26 aufeinander zu bewegt, bis die überlappenden Enden 22a, 22b, 23a, 23b der Ritzelhälften 28a, 28b über die Verzahnungsstrukturen 24a, 24b ineinandergreifen und die beiden Ritzelhälften 28a, 28b vorteilhaft fest miteinander verbinden. Hierzu ist gegebenenfalls eine vergleichsweise erhöhte Druckkraft parallel zur Rotationsachse A durch einen Monteur auf die Ritzelhälften 28a, 28b aufzubringen, um die Verzahnungsstrukturen 24a, 24b in eine z.B. kraftschlüssige Verbindung zu bringen und die Ritzelhälften 28a, 28b in ihre Montageendposition, insbesondere auf der Antriebswelle 1, zu positionieren (Figur 9) .

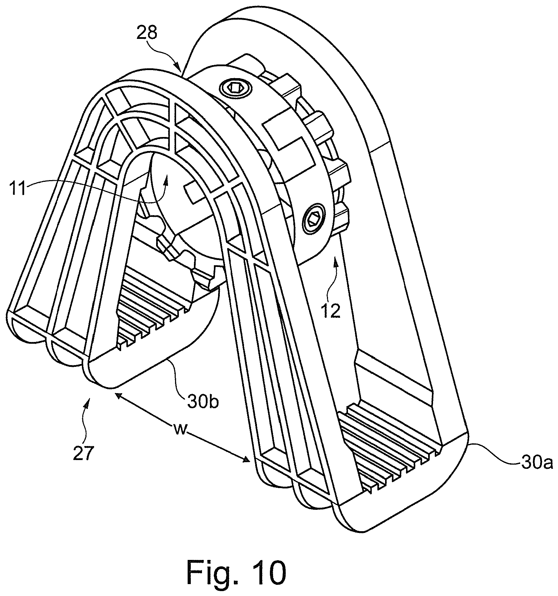

In Figur 10 ist eine Variante eines Gehäuses 27 dargestellt. Das Gehäuse 27 ist einstückig mit insbesondere einstückig integrierter Gleitleiste ausgebildet. Weiterhin ist die Anordnung des Ritzels 28 am Gehäuse 27 im Funktionszustand ohne Antriebswelle 1 gezeigt.

In der Ausführungsvariante des Gehäuses 27 nach Figur 10 ist die Öffnungsweite w zwischen den Schenkelabschnitten des Gehäuses 27 derart ausgeformt, dass die Schenkelabschnitte zwei Seitenflächen eines Trapezes bilden und die beiden Seitenflächen in Richtung Lageröffnungen 11, 12 sich verjüngen. Beispielsweise umfasst die Öffnungsweite w mindestens den Außendurchmesser eines Ritzels oder ist etwas größer. Dadurch wird es möglich, das Gehäuse 2 mit der Öffnungsweite w über die Antriebswelle 1 mit montiertem Ritzel radial zu stülpen, bis die Antriebswelle 1 in den Lageraussparungen 11, 12 und einer dort ausgebildeten Lagerfläche satt anliegt (Figur 11). Diese vorteilhafte Ausbildung des Gehäuses 27 ermöglicht beispielsweise auch die Verwendung eines einteiligen Ritzels (nicht dargestellt), dass von einem offenen Ende der Antriebswelle 1 ausgehend über die Antriebswelle 1 an seine Funktionsposition geschoben wird.

### Bezugszeichenliste:

- 1: Antriebswelle
- 2: Gehäuse
- 3, 29: Zahnstangengetriebe
- 4: Schenkel
- 4a - b: Schenkelabschnitt
- 5: Schenkel
- 5a - b: Schenkelabschnitt
- 6a - b: Verbindungssteg
- 7a - b: Schlaufe
- 8 - 9: Verbindungsbogen
- 10: Öffnung
- 11: Lageraussparung
- 11a: Lagereinsatz
- 12: Lageraussparung
- 12a: Lagereinsatz
- 13: Gleitleiste
- 14 - 15: Aussparung
- 16: Gleitrippe
- 17 - 18: Berandungswand
- 19: Zahnstange
- 20: Ritzel
- 20a - b: Ritzelhälfte
- 21: Loch
- 22a - b: Ritzelhälfteende
- 23a - b: Ritzelhälfteende
- 24a - b: Verzahnung
- 25a - b: Anlagefläche
- 26: Antriebswellenoberfläche
- 27: Gehäuse
- 28: Ritzel
- 28a - b: Ritzelhälfte
- 30a - b: Gleitrippe

## Patentansprüche

1. Getriebevorrichtung zur Anbringung an einer Antriebswelle (1) mit einem Grundkörper (2, 27), der die Antriebswelle (1) umschließt, einem Ritzel (20, 28), das im montierten Zustand im Grundkörper (2, 27) und auf der Antriebswelle (1) angeordnet ist, sowie einer Zahnstange (19), die mit dem Ritzel (20, 28) zusammenwirkt und durch den Grundkörper (2, 27) verläuft, wobei der Grundkörper (2, 27) einseitig derart offen ist, dass er sich auf die Antriebswelle (1) in radialer Richtung aufschieben lässt, **dadurch gekennzeichnet, dass** das Ritzel (20, 28) mehrteilig ist, sodass eine Montage an der Antriebswelle (1) ermöglicht ist, wobei das Ritzel (20, 28) derart ausgestaltet ist, dass sich Ritzelteile (20a, 20b, 28a, 28b) des Ritzels (20, 28) in einer ersten Bewegung radial zu Antriebswelle (1) und in einer bevorzugt abschließenden Bewegung axial zur Antriebswelle (1) auf die Antriebswelle (1) aufschieben und auf der Antriebswelle (1) zusammenfügen lassen, wobei die Ritzelteile (20a, 20b, 28a, 28b) des Ritzels (20, 28) derart ausgebildet sind, dass Enden der Ritzelteile (20a, 20b, 28a, 28b) des Ritzels (20, 28) im zusammengesetzten Zustand in einer Richtung axial zur Antriebswelle (1) überlappend vorhanden sind.

2. Getriebevorrichtung nach Anspruch 1, **dadurch gekennzeichnet, dass** der Grundkörper (2, 27) einen Lagerabschnitt (11, 12) zur Lagerung der Antriebswelle (1) umfasst.

3. Getriebevorrichtung nach dem vorhergehenden Anspruch 2, **dadurch gekennzeichnet, dass** der Lagerabschnitt (11, 12) ein Gleitlager ist.

4. Getriebevorrichtung nach einem der vorhergehenden Ansprüchen, **dadurch gekennzeichnet, dass** der Grundkörper (2, 27) aus Kunststoff besteht.

5. Getriebevorrichtung nach einem der vorhergehenden Ansprüchen 1 bis 3, **dadurch gekennzeichnet, dass** der Grundkörper (2, 27) ein Blechbiegeteil ist.

6. Getriebevorrichtung nach einem der vorhergehenden Ansprüchen, **dadurch gekennzeichnet, dass** eine Gleitleiste (13) für die Zahnstange (19) vorgesehen ist.

7. Getriebevorrichtung nach dem vorhergehenden Anspruch 6, **dadurch gekennzeichnet, dass** die Gleitleiste (13) so ausgeformt ist, dass ein Anschlag (14, 15) zum Grundkörper (2, 27) gegeben ist, der eine Verschiebung der Gleitleiste (13) in einer Längsrichtung zur Zahnstange (19) verhindert.

8. Getriebevorrichtung nach einem der vorhergehenden Ansprüchen, **dadurch gekennzeichnet, dass** der Grundkörper (2, 27) zwei Schenkel (4, 5) umfasst, die im montierten Zustand über eine Antriebswelle (1) überstehen, und an welchen sich eine Gleitleiste für die Zahnstange (19) abstützt.

9. Getriebevorrichtung nach Anspruch 8, **dadurch gekennzeichnet, dass** die Schenkel (4, 5) derart ausgestaltet sind, dass sich jeweils Schenkelabschnitte (4a, 4b) sowie Schenkelabschnitte (5a, 5b) eines Schenkels (4, 5) in Richtung Zahnstange (19) betrachtet über die Gleitleiste (13) gegeneinander abstützen.

10. Getriebevorrichtung nach einem der vorhergehenden Ansprüchen, **dadurch gekennzeichnet, dass** die Enden (22a, 22b, 23a, 23b) der Ritzelteile (20a, 20b, 28a, 28b) des Ritzels (20, 28) eine Verzahnung (24a, 24b) aufweisen.

## Claims

1. Transmission device for installation on a driveshaft (1), having a base body (2, 27) which encloses the driveshaft (1), a pinion (20, 28) which, in the mounted state, is arranged in the base body (2, 27) and on the driveshaft (1), and a rack (19) which interacts with the pinion (20, 28) and runs through the base body (2, 27), wherein the base body (2, 27) is open on one side in such a way that it can be fitted onto the driveshaft (1) in a radial direction, **characterized in that** the pinion (20, 28) is in multiple parts such that it is possible to perform a mounting process on the driveshaft (1), wherein the pinion (20, 28) is configured in such a way that pinion parts (20a, 20b, 28a, 28b) of the pinion (20, 28) can be fitted onto the driveshaft (1), and joined together on the driveshaft (1), in a first radial movement with respect to the driveshaft (1) and in a preferably concluding axial movement with respect to the driveshaft (1), wherein the pinion parts (20a, 20b, 28a, 28b) of the pinion (20, 28) are configured in such a way that ends of the pinion parts (20a, 20b, 28a, 28b) of the pinion (20, 28) overlap in the assembled state in an axial direction with respect to the driveshaft (1).

2. Transmission device according to Claim 1, **characterized in that** the base body (2, 27) comprises a bearing section (11, 12) for supporting the driveshaft (1).

3. Transmission device according to preceding Claim 2, **characterized in that** the bearing section (11, 12) is a sliding bearing.

4. Transmission device according to one of the preceding claims, **characterized in that** the base body (2, 27) is composed of plastic.

5. Transmission device according to one of preceding Claims 1 to 3, **characterized in that** the base body (2, 27) is a bent sheet-metal part.

6. Transmission device according to one of the preceding claims, **characterized in that** a sliding bar (13) is provided for the rack (19).

7. Transmission device according to preceding Claim 6, **characterized in that** the sliding bar (13) is shaped in such a way that a stop (14, 15) is provided for the base body (2, 27), which stop (14, 15) prevents the sliding bar (13) from sliding in a longitudinal direction with respect to the rack (19).

8. Transmission device according to one of the preceding claims, **characterized in that** the base body (2, 27) comprises two limbs (4, 5) which, in the mounted state, protrude over a driveshaft (1) and on which a sliding bar for the rack (19) is supported.

9. Transmission device according to Claim 8, **characterized in that** the limbs (4, 5) are configured in such a way that, in each case, limb sections (4a, 4b) and limb sections (5a, 5b) of a limb (4, 5), when considered in the direction of the rack (19), support one another via the sliding bar (13).

10. Transmission device according to one of the preceding claims, **characterized in that** the ends (22a, 22b, 23a, 23b) of the pinion parts (20a, 20b, 28a, 28b) of the pinion (20, 28) have a toothing arrangement (24a, 24b).

## Revendications

1. Dispositif d'engrenage destiné à être monté sur un arbre d'entraînement (1) comprenant un corps de base (2, 27) qui entoure l'arbre d'entraînement (1), un pignon (20, 28) qui, dans l'état monté, est disposé dans le corps de base (2, 27) et sur l'arbre d'entraînement (1), ainsi qu'une crémaillère (19) qui coopère avec le pignon (20, 28) et qui s'étend à travers le corps de base (2, 27), le corps de base (2, 27) étant ouvert d'un côté de telle sorte qu'il puisse être poussé sur l'arbre d'entraînement (1) dans la direction radiale, **caractérisé en ce que** le pignon (20, 28) est en plusieurs parties de telle sorte qu'un montage sur l'arbre d'entraînement (1) soit possible, le pignon (20, 28) étant configuré de telle sorte que des parties de pignon (20a, 20b, 28a, 28b) du pignon (20, 28) soient poussées sur l'arbre d'entraînement (1) dans un premier mouvement radialement par rapport à l'arbre d'entraînement (1) et dans un mouvement de préférence final axialement par rapport à l'arbre d'entraînement (1), et puissent être assemblées sur l'arbre d'entraînement (1), les parties de pignon (20a, 20b, 28a, 28b) du pignon (20, 28) étant réalisées de telle sorte que des extrémités des parties de pignon (20a, 20b, 28a, 28b) du pignon (20, 28), dans l'état assemblé, soient présentes de manière à se chevaucher dans une direction axialement par rapport à l'axe d'entraînement (1).

2. Dispositif d'engrenage selon la revendication 1, **caractérisé en ce que** le corps de base (2, 27) comprend une portion de palier (11, 12) pour le support sur palier de l'arbre d'entraînement (1).

3. Dispositif d'engrenage selon la revendication précédente 2, **caractérisé en ce que** la portion de palier (11, 12) est un palier lisse.

4. Dispositif d'engrenage selon l'une quelconque des revendications précédentes, **caractérisé en ce que** le corps de base (2, 27) se compose de plastique.

5. Dispositif d'engrenage selon l'une quelconque des revendications précédentes 1 à 3, **caractérisé en ce que** le corps de base (2, 27) est une pièce cintrée en tôle.

6. Dispositif d'engrenage selon l'une quelconque des revendications précédentes, **caractérisé en ce qu'**une barre de glissement (13) est prévue pour la crémaillère (19).

7. Dispositif d'engrenage selon la revendication précédente 6, **caractérisé en ce que** la barre de glissement (13) est formée de telle sorte que l'on obtienne une butée (14, 15) par rapport au corps de base (2, 27), laquelle empêche un déplacement de la barre de glissement (13) dans une direction longitudinale vers la crémaillère (19).

8. Dispositif d'engrenage selon l'une quelconque des revendications précédentes, **caractérisé en ce que** le corps de base (2, 27) comprend deux branches (4, 5) qui, dans l'état monté, font saillie au-delà d'un arbre d'entraînement (1) et sur lesquelles s'appuie une barre de glissement pour la crémaillère (19).

9. Dispositif d'engrenage selon la revendication 8, **caractérisé en ce que** les branches (4, 5) sont configurées de telle sorte que des portions de branches (4a, 4b) et des portions de branches (5a, 5b) respectives d'une branche (4, 5), vu dans la direction de la crémaillère (19), s'appuient les unes contre les autres par le biais de la barre de glissement (13).

10. Dispositif d'engrenage selon l'une quelconque des revendications précédentes, **caractérisé en ce que** les extrémités (22a, 22b, 23a, 23b) des parties de pignon (20a, 20b, 28a, 28b) du pignon (20, 28) présentent une denture (24a, 24b).
